# NEUE EUROPÄISCHE PATENTSCHRIFT

(11) **EP 0 289 895 B2**
(45) Veröffentlichungstag und Bekanntmachung des Hinweises auf die Entscheidung über den Einspruch: **13.10.1999**
(45) Hinweis auf die Patenterteilung: 21.07.1993
(21) Anmeldenummer: 88106565.0
(22) Anmeldetag: 23.04.1988
(51) Int. Cl.: C08F 220/04, C11D 3/37

(54) **Copolymerisate ungesättigter Carbonsäuren, Verfahren zur Herstellung derselben und ihre Verwendung**
Copolymers of unsaturated carboxylic acids, their preparation and their use
Copolymères d'acides carboxyliques insaturés, leur préparation et leur utilisation

(30) Priorität: 02.05.1987 DE 3714732
(43) Veröffentlichungstag der Anmeldung: 09.11.1988
(73) Patentinhaber: GRILLO-WERKE AG, D-47169 Duisburg (DE)
(72) Erfinder: Driemel, Klaus, Dipl.-Ing., D-4100 Duisburg 25 (DE); Bunthoff, Klaus, Dr. Dipl.-Chem., D-4100 Duisburg 11 (DE); Nies, Helmut, D-4134 Rheinberg 3 (DE)
(74) Vertreter: Werner, Hans-Karsten, Dr.Dipl.-Chem.

(56) Entgegenhaltungen:
- EP-A- 0 031 005
- DE-A- 1 945 340
- JP-A- 57 210 071
- JP-A- 61 031 498
- Encyclopedia of Polymer Science and Technology, Vol. 12, S. 845-847, 1970
- Journal of Applied Polymer Science, Vol. 21, S. 1647-1654, 1977
- J. Rocek "The Chemistry of the Carbonylgroup", S. Patai, Ed. Interscience, New York, 1966, S. 490
- H.R. Christen, "Grundlagen der organischen Chemie", Verlag Sauerländer, Aarau, 1972, 2. Auflage, S. 780-781

## Beschreibung

Gegenstand der vorliegenden Erfindung sind Copolymerisate ungesättigter Carbonsäuren mit anderen ungesättigten Verbindungen, Verfahren zu ihrer Herstellung sowie ihre Verwendung als Sequestrierungsmittel. Komplexbildner und Co-Builder in Wasch- und Reinigungsmitteln.

Copolymerisate ungesättigter Carbonsäuren mit anderen ungesättigten Verbindungen sind bekannt, beispielsweise aus der DE-PS 19 04 940 Hierin sind Copolymerisate von Acrolein mit Acrylsäure beschrieben, welche als Polycarboxylate Anwendung finden können als Komplexbildner.

Andere Polycarboxylate sind bekannt als Copolymerisate verschiedener ungesättigter Carbonsäuren. So sind insbesondere Copolymerisate von Acrylsäure. Methacrylsäure und Maleinsäure sowie ihre Verwendung als Zusätze fur Wasch- und Reinigungsmittel bekannt aus der DE-PS 26 16 261, der DE-OS 29 10 133, der DE-OS 29 36 984, der DE-OS 32 33 775, der DE-OS 32 33 777, der DE-OS 34 26 368 und der DE-OS 36 04 223.

Diese Polycarboxylate sind durch die Einführung phosphatarmer und phosphatfreier Waschmittel an Bedeutung gestiegen: vgl. Diehl, "Phosphattreies Waschen", Fette und Öle. Fettderivate. Folgeprodukte, 112 11986), Seiten 489 bis 492 sowie Zini, "The Use of Acrylic Based Homo- and Copolymers as Detergent Additives". Chemieprodukte: Haushalt, Gewerbe. Industrie 83 (1987), Seiten 45 bis 48.

Ein erheblicher Nachteil der bisher verwendeten Polycarboxylate besteht darin, daß sie in Kläranlagen biologisch kaum abbaubar sind. Sie werden jedoch durch Absorption an den Klärschlamm eliminiert und gelangen somit nicht in die Gewässer. Ähnliche Produkte werden nämlich seit Jahren bereits zur Klärschlammflokulation eingesetzt.

Die vorliegende Erfindung hat sich die Aufgabe gestellt, Polycarboxylate zu entwickeln, welche eine verbesserte biologische Abbaubarkeit aufweisen und dabei preiswert. einfach und zuverlässig hergestellt werden können.

Die Aufgabe konnte jetzt überraschend einfach gelöst werden durch Copolymerisate auf der Basis von ungesättigten Carbonsäuren und zur Enolatbildung befähigten Monosacchariden, dadurch erhältlich, daß die ungesättigten Carbonsäuren in einer Menge von 35 bis 80 Gew.-%, bezogen auf die Gesamtmonomeren, mit einer alkalischen Lösung der Monosaccharide in Gegenwart von radikalischen Initiatoren bei Temperaturen zwischen 60 und 110 °C copolymerisiert werden, wobei wenigstens eines der beiden Monomeren zu der Reaktionsmischung im Reaktionsgefäß zugetropft wird, dann abgekühlt und die Copolymerisate durch Ansäuern ausgefällt werden.

Dieses Ergebnis war keinesfalls vorherzusehen, da alkalische Lösungen zur Enolatbildung befähigter Monosaccharide bekanntlich sehr instabil sind und zur raschen Zersetzung dieser Lösungen führen. Es wurde jetzt gefunden, daß diese Lösungen unter den erfindungsgemäßen Bedingungen relativ stabil sind und sich beispielsweise so lange nicht oder nur wenig verfärben, wie noch die Polymerisation bzw Copolymerisation mit den ungesättigten Carbonsäuren stattfindet. Erst wenn die ungesättigten Carbonsäuren durch Polymerisation aus der Lösung verschwunden sind, beginnt die übliche Zersetzung und Verfärbung der alkalischen Zuckerlösungen.

Die erfindungsgemäßen Copolymerisate können in einfacher Weise aus dem Reaktionsgemisch entfernt werden, nämlich durch einfaches Ansäuern, wodurch sie dann ausgefällt werden oder sich als separate Phase abscheiden.

Die angesäuerten Mutterlaugen enthalten in erster Linie nicht umgesetzte Mengen an Monosacchariden. Diese können wiedergewönnen und wieder eingesetzt werden. In vielen Fällen kann sogar auf diese Abtrennung verzichtet werden und das Gesamtreaktionsgemisch erfindungsgemäß verwendet werden.

Ein besonderer Vorteil der erfindungsgemäßen Copolymerisate ist, daß die Monosaccharidkomponente preiswert aus natürlich nachwachsenden Rohstoffen gewonnen wird und somit nur bezüglich der ungesättigten Carbonsäuren auf fossile Rohstoffe zurückgegriffen werden muß.

Überraschend war weiterhin der Befund, daß die erfindungsgemäßen Copolymerisate, bezogen auf den Anteil an ungesättigter Carbonsäure, ein erheblich gesteigertes Calcium- und Magnesiumbindungsvermögen aufweisen. Die Monosaccharidkomponente in den Copolymerisaten trägt somit in erheblichem Maße zum Calcium- und Magnesiumbindungsvermögen bei.

Die neuen Copolymerisate sind somit in besonderem Maße geeignet, als Sequestrierungsmittel, Komplexbildner und Co-Builder in Wasch- und Reinigungsmitteln eingesetzt zu werden.

Die Eigenschaften der Copolymerisate können in relativ weiten Grenzen variiert werden, Vorzugsweise werden 20 bis 65% Monosaccharid mit 35 bis 80% ungesättigter Monocarbonsäure umgesetzt.

Zur Enolatbildung befähigte Monosaccharide sind in erster Linie Glukose. Fruktose, Mannose, Maltose, Xylose und Galaktose. Besonders bevorzugt ist natürlich die Glukose, da sie besonders preiswert und mengenmäßig nahezu unbeschränkt zur Verfügung steht. Sie kann auch in relativ ungereinigter Form erfindungsgemäß eingesetzt werden, da die Verunreinigungen nicht oder in nicht störender Form in das Copolymerisat eingebaut werden.

Das erfindungsgemäße Verfahren wird vorzugsweise so durchgeführt, daß zu der alkalischen Lösung des zur Enolatbildung befähigten Monosaccharids die ungesättigte Carbonsäure und der radikalische Initiator zugegeben werden und dann langsam erhitzt wird. Oberhalb von 60°C springt die Reaktion an und wird dann oftmals so heftig, daß die Temperatur über 110°C hinausgeht. Dies sollte nach Möglichkeit vermieden werden, da es hierbei zu einer unerwünschten stärkeren Zersetzung des noch nicht in das Copolymerisat eingebauten Zuckers kommt.

Als ungesättigte Carbonsäuren kommen in erster Linie die monoethylenisch ungesättigten Monocarbonsäuren mit 3 bis 10 Kohlenstoffatomen in Frage, dabei insbesondere die Acrylsäure und Methacrylsäure. Prinzipiell können aber auch andere ungesättigte Carbonsäuren wie Maleinsäure, Itakonsäure etc. eingesetzt werden. Eine bevorzugte Ausführungsform ist in Anspruch 2 beschrieben.

Als radikalische Initiatoren werden insbesondere Peroxide eingesetzt. Besonders einfach ist die Verwendung von Wasserstoffperoxid.

Das Calciumbindevermögen der erfindungsgemäßen Copolymerisate erfolgt beispielsweise durch Trübungstitration mit Calciumacetat. Dazu löst man 1 g des zu prüfenden Copolymerisats in 100 ml destilliertem Wasser auf und versetzt dieses dann mit 10 ml 2%-iger Natroncarbonatlösung. Der pH-Wert dieser Lösung wird auf 11 eingestellt und wahrend der Titration konstant gehalten. Man titriert dann mit 4,4%-iger Calciumacetatlösung, bis eine deutliche konstante Trübung auftritt, welche nephelometrisch bestimmt wird. Die Zugabe der Calciumacetatlösung erfolgt in Intervallen von 30 Sekunden mit jeweils 1 ml.

In den nachfolgenden Beispielen sind einige typische Copolymerisate und ihre Herstellung beschrieben.

### Beispiel 1

1 mol Glukose wird in 30%-iger Natronlauge (3 mol NaOH in Wasser gelöst) unter Rühren bei 0°C gelöst. Dann werden 0,07 mol H₂O₂ zu dieser Lösung gegeben. Die Temperatur bleibt bei 0°C. Danach läßt man 3 mol Acrylsäure zu der alkalischen Zucker-H₂O₂-Lösung zutropfen. Hierbei steigt die Temperatur auf ca. 75°C an. Es wird weiter auf 85°C aufgeheizt. Von nun an verläuft die Reaktion exotherm und die Temperatur steigt bis auf 105°C an. Nach Erreichen des Temperaturmaximums wird sofort abgekühlt auf 20°C. Es wird eine hochviskose Lösung erhalten. Das Calciumbindevermögen, bezogen auf den Wirkstoffgehalt, liegt bei 450 mg Calciumcarbonat/g Wirksubstanz. Der Wirkstoffgehalt der Lösung liegt bei 48% und wird durch Ansäuern ermittelt.

### Beispiel 2

3 mol Acrylsäure werden mit 20%-iger Natronlauge (3 mol Natronlauge in Wasser gelöst) neutralisiert. 1 mol Glukose wird in 200 g Wasser gelöst. Zu dieser Lösung wird 1 mol H₂O₂ hinzugegeben. In einem Reaktionsgefäß werden gleichzeitig 200 g Wasser vorgelegt und auf 85°C erhitzt. Die beiden Lösungen läßt man während ca. 90 Minuten zutropfen. Der pH-Wert des Reaktionsmediums wird während der Zutropfphase konstant auf pH 9,0 gehalten. Nach Zugabe der gesamten Menge steigt die Temperatur noch einmal auf ca. 95 bis 103°C. Danach wird sofort abgekühlt. Es wird eine niedrigviskose polymere Lösung erhalten. Der Wirkstoffgehalt beträgt 32%. Das Calciumbindevermögen beträgt 670 mg Calciumcarbonat/g Wirkstoffsubstanz.

### Beispiel 3

72 g Acrylsäure werden mit 200 g 20%-iger Natronlauge neutralisiert. 100 g Glukose werden in 100 g Wasser gelöst. Im Reaktionsgefäß werden 100 g Wasser vorgelegt. In die Glukoselösung werden 57 g H₂O₂ 30%-ig hinzugegeben. Das Wasser im Reaktionsgefaß wird auf 85°C erhitzt. Die Lösungen läßt man über 50 Minuten hinzutropfen. Die Reaktionstemperatur steigt zwischenzeitlich auf 97°C an. Nach Beendigung der Tropfzeit wird gewartet, bis die Temperatur nicht weiter ansteigt. Der pH-Wert wird während der gesamten Reaktion auf 9,0 konstant gehalten. Nach Beendigung der Reaktion wird sofort abgekühlt (ca. 55 Minuten). Der Wirkstoffgehalt dieser polymeren Lösung beträgt 32%. Das Calciumbindevermögen beträgt 550 mg Calciumcarbonat/g Wirksubstanz.

### Beispiel 4

36 g Acrylsäure werden mit 100 g 20%-iger Natronlauge neutralisiert. 100 g Glukose werden in 100 g Wasser gelöst. Hierzu werden 57 g 30%-iges H₂O₂ hinzugegeben. In dem Reaktionsgefäß werden 95 g Wasser vorgelegt und auf 84 bis 85°C erhitzt. Die Reaktionslösungen läßt man über ca. 40 Minuten langsam zutropfen. Nach Beendigung des Zutropfens steigt die Temperatur auf maximal 97°C an. Während der gesamten Reaktionszeit wird der pH-Wert auf 9,3 bis 9,5 konstant gehalten. Nach Erreichen des Temperaturmaximums wird sofort gekühlt. Es wird eine polymere Lösung mit einem Wirkstoffgehalt von 30% erhalten. Das Calciumbindevermögen dieser Lösung beträgt 430 mg Calciumcarbonat/g Wirksubstanz.

### Beispiel 5

144 g Acrylsäure werden mit 400 g 20%-iger Natronlauge neutralisiert. 100 g Glukose werden in 100 g Wasser gelöst. Hierzu läßt man 57 g 30%-iges H₂O₂ zutropfen. In dem Reaktionsgefäß werden 240 g Wasser vorgelegt und auf 80 bis 85°C erhitzt. Die Reaktionslösungen läßt man über ca. 50 Minuten zutropfen bei einem konstanten pH-Wert von 9,1. Nach Zugabe der Lösungen steigt die Temperatur auf maximal 97°C (ca. 10 Minuten Nachreaktionszeit). Danach wird sofort wieder gekühlt. Man erhalt eine polymere Lösung mit einem Wirkstoffgehalt von 29%. Das Calciumbindevermögen beträgt 620 mg Calciumcarbonat/g Wirksubstanz.

### Beispiel 6

Im Reaktionsgefäß werden 100 g Glucose, gelöst in 200 g Wasser, vorgelegt. 195 g Itaconsäure werden mit 400 g 30%-iger Natronlauge neutralisiert. Das Reaktionsgefäß wird mit der Glucoselösung auf eine Reaktionstemperatur von 80°C aufgeheizt. In die aufgeheizte Glucoselösung läßt man über 110 Minuten die neutralisierte Itaconsäurelösung zutropfen. Gleichzeitig läßt man eine Lösung von 57 g 30%-igem H₂O₂, gelöst in 100 g Wasser, zutropfen. Der pH-Wert wird wahrend des ganzen Versuches konstant auf 8,9 gehalten. Die Reaktionstemperatur steigt zwischenzeitlich auf 87°C an. Nach Beendigung der Tropfzeit wird die Lösung sofort abgekühlt. Der Wirkstoffgehalt dieser polymeren Lösung beträgt 35%. Das Calciumbindevermögen beträgt 250 mg Calciumcarbonat/g Wirksubstanz. Die biologische Abbaubarkeit beträgt 80%.

### Beispiel 7

129 g Fructose werden in 171 g Wasser gelöst und im Reaktionsgefäß vorgelegt. 108 g Acrylsäure werden mit 300 g 20%-iger Natronlauge neutralisiert. Die Fructoselösung im Reaktionsgefäß wird auf eine Temperatur von 80°C gebracht. Während einer Zeit von 80 Minuten läßt man langsam die neutralisierte Acrylsäurelösung zutropfen. Gleichzeitig läßt man 57 g einer 30%-igen H₂O₂-Lösung zutropfen. Während der Versuchszeit wird der pH-Wert auf 9,0 gehalten. Die Reaktionstemperatur steigt bis maximal 90°C an. Nach Beendigung des Zutropfens der Reaktionslösungen (Acrylsäure und H₂O₂) wird das Reaktionsgemisch im Reaktionsgefäß sofort abgekühlt. Der Wirkstoffgehalt der polymeren Lösung beträgt 35%. Das Calciumbindevermögen beträgt 550 mg Calciumcarbonat/g Wirksubstanz. Die biologische Abbaubarkeit beträgt 88%.

### Beispiel 8

90 g Mannose werden in 210 g Wasser gelöst und im Reaktionsgefäß vorgelegt. 108 g Acrylsäure werden mit 300 g 20%-iger Natronlauge neutralisiert. Das Reaktionsgefäß wird mit der Mannoselösung auf 80°C erhitzt. Während einer Zeit von 60 Minuten läßt man die neutralisierte Acrylsäure und gleichzeitig 57 g 30%-iges H₂O₂ zutropfen. Der pH-Wert wird während der Versuchszeit auf 9,0 gehalten. Die Reaktionstemperatur steigt auf maximal 88°C an. Nach Beendigung der Zugabe der Acrylsäure und des Wasserstoffperoxids wird das Reaktionsgemisch fort abgekühlt. Der Wirkstoffgehalt dieser polymeren Lösung beträgt 30%. Das Calciumbindevermögen beträgt 550 mg Calciumcarbonat/g Wirksubstanz. Die biologische Abbaubarkeit beträgt 80%.

### Beispiel 9

100 g Glucose werden in 200 g Wasser gelöst und im Reaktionsgefäß vorgelegt. Die Glucoselösung wird auf 80°C aufgeheizt. Zu dieser Lösung läßt man langsam 130 g Methacrylsäure, neutralisiert mit 300 g 20%-iger Natronlauge, über einen Zeitraum von 150 Minuten zutropfen. Gleichzeitig läßt man 57 g 30%-iges H₂O₂ zutropfen. Die Reaktionstemperatur steigt bis auf maximal 93°C. Der pH-Wert wird während der ganzen Versuchszeit konstant bei 9,0 gehalten. Nach Beendigung des Zutropfens der Reaktanden wird das Reaktionsgemisch sofort abgekühlt. Man erhält eine polymere Lösung mit einem Wirkstoffgehalt von 34%. Das Calciumbindevermögen beträgt 650 mg Calciumcarbonat/g Wirksubstanz. Die biologische Abbaubarkeit beträgt 85%.

Zur Strukturaufklärung der erfindungsgemäßen Copolymerisate wurden die folgenden Untersuchungen mit Glucose/Acrylsäure-Copolymerisaten durchgeführt:
a) Schubstangen-Pyrolyse-Massenspektroskopie
b) Protonen-NMR und 13-C-NMR

### ad a)

Nach dem Einbringen der Substanzen mit der Schubstange ins Masenspektrometer zeigt sich beim Aufheizen bis 300°C im Spektrum kein Massesignal. Das heißt, die Substanzen zeigen bis 300°C keine Zersetzung, die mit einem wesentlich molekularen Zerbrechen und Abspalten von typischen Massen, wie sie beim Erhitzen von Glucoseestern oder Acrylsäureestern auftreten, verbunden ist.

Eine Wiederholung der massenspektroskopischen Untersuchung durch chemische lonisation zeigte das gleiche leere Spektrum bis zu einer Temperatur von 300°C.

### ad b)

Kernresonanzspektrometrische Untersuchungen der Substanzen zeigen Signale von Acrylsäureeinheiten bei 1,5 bis 2,5 ppm, von Glucoseeinheiten bei 3,4 bis 4,2 ppm. Ester-Einheiten sind nicht erkennbar. Demnach liegt eine C-C-Verknüpfung zwischen Acrylsäure und Glucoseeinheiten vor. Es handelt sich nicht um Zuckerester. Dies geht auch daraus hervor, daß das erfindungsgemäße Verfahren im wäßrigen Medium mit überschüssigem Wasser durchgeführt wird, während Zuckerester nur in wasserfreiem Medium durch Umsetzung mit Säurechloriden oder Säureanhydriden entstehen. Zuckerester besitzen auch nicht die waschmittelwirksamen Eigenschaften der erfindungsgemäßen Verbindungen, da die für die calcium- und magnesiuminhibierende Wirkung notwendigen Carboxylgruppen fehlen.

In der nachstehenden Tabelle sind zusammengestellt das Calcium-Bindevermögen und der Grad der biologischen Abbaubarkeit verschiedener Chargen der Copolymerisate aus Acrylsäure und Glucose, verglichen mit einem handelsüblichen Polyacrylat und einem Polyacrylat gemischt mit Glucose im Verhältnis 2:1. Aus dieser Tabelle ist ersichtlich, daß die erfindungsgemäßen Produkte einen sehr hohen biologischen Abbaubarkeitsgrad gegenüber handelsüblichen Polyacrylaten haben. Die Erhöhung des biologischen Abbaubarkeitsgrades bei dem Zusatz von Glucose zur Polyacrylsäure ist nur auf die Glucose beschränkt und entspricht ihrem Anteil.

**Tabelle**

| Produkt (Chargen-Nr.) | CaCO₃ 20°C | mg/g 70°C | Grad der biol. Abbaubarkeit (%) | Molgewichte |
|---|---|---|---|---|
| 170 | 560 | 540 | 80 | 95.000 |
| 199 | 600 | 600 | 82 | 60.000 |
| 181 | 430 | 410 | 94 | 130.000 |
| 174 | 680 | 670 | 85 | 20.000 |
| 162 | 560 | 530 | 80 | 110.000 |
| Polyacrylat | 600 | - | 0 | 70.000 |
| Polyacrylat u. | - | - | 30 | 70.000 |
| Glucose 2:1 | | | | + 180 |

## Patentansprüche

1. Copolymerisate auf der Basis von ungesättigten Carbonsäuren und zur Enolatbildung befähigten Monosacchariden, dadurch erhältlich, daß die ungesättigten Carbonsäuren in einer Menge von 35 bis 80 Gew.-%, bezogen auf die Gesamtmonomeren, mit einer alkalischen Lösung der Monosaccharide in Gegenwart von radikalischen Initiatoren bei Temperaturen zwischen 60 und 110 °C copolymerisiert werden, wobei wenigstens eines der beiden Monomeren zu der Reaktionsmischung im Reaktionsgefäß zugetropft wird, dann abgekühlt und die Copolymerisate durch Ansäuern ausgefällt werden.

2. Copolymerisate gemäß Anspruch 1, erhältlich durch Umsetzung von alkalischen Lösungen von Glukose bei pH-Werten von 8 bis 10 mit Acrylsäure und/oder Methacrylsäure in Gegenwart von Wasserstoffperoxid.

3. Verfahren zur Herstellung von Copolymerisaten auf der Basis von ungesättigten Carbonsäuren und zur Enolatbildung befähigten Monosacchariden, dadurch gekennzeichnet, daß die ungesättigten Carbonsäuren in einer Menge von 35 bis 80 Gew.-%, bezogen auf die Gesamtmonomeren, mit einer alkalischen Lösung der zur Enolatbildung befähigten Monosacchariden in Gegenwart von radikalischen Initiatoren bei Temperaturen zwischen 60 und 110 °C copolymerisiert werden, wobei wenigstens eines der beiden Monomeren zu der Reaktionsmischung im Reaktionsgefäß zugetropft wird, dann abgekühlt und die Copolymerisate durch Ansäuern ausgefällt werden.

4. Verwendung der Copolymerisate gemäß Ansprüchen 1 oder 2, als Sequestrierungsmittel, Komplexbildner und Cobuilder in Wasch- und Reinigungsmitteln.

## Claims

1. Copolymerizates based on unsaturated carboxylic acids and monosaccharides capable of forming enolates, obtainable by copolymerizing said unsaturated carboxylic acids in an amount of from 35 to 80% by weight, based on the total monomers, with an alkaline solution of said monosaccharides in the presence of free-radical initiators at temperatures of between 60 and 110°C.wherein at least one of the two monomers is added dropwise to the reaction mixture in the reaction vessel, followed by cooling and precipitating the copolymerizates by acidification.

2. The copolymerizates according to claim 1, obtainable by reacting alkaline solutions of glucose at pH values of from 8 to 10 with acrylic acid and/or methacrylic acid in the presence of hydrogen peroxide.

3. A process for preparing copolymerizates based on unsaturated carboxylic acids and monosaccharides capable of forming enolates, characterized in that said unsaturated carboxylic acids in an amount of from 35 to 80% by weight, based on the total monomers, are copolymerized with an alkaline solution of said monosaccharides capable of forming enolates in the presence of free-radical initiators at temperatures of between 60 and 110°C, wherein at least one of the two monomers is added dropwise to the reaction mixture in the reaction vessel, followed by cooling and precipitating the copolymerizates by acidification.

4. Use of the copolymerizates according to claims 1 or 2 as sequestering agents, complexing agents and co-builders in detergents and cleaning agents.

## Revendications

1. Copolymères à base d'acides carboxyliques insaturés et de monosaccharides aptes à la formation d'énolates, qu'on peut obtenir par copolymérisation des acides carboxyliques insaturés, en une quantité de 35 à 80 % en poids, par rapport aux monomères totaux, avec une solution alcaline des monosaccharides en présence d'initiateurs radicalaires, à des températures comprises entre 60 et 110°C, au moins un des deux monomères étant ajouté goutte à goutte au mélange de réaction dans la cuve de réaction, ensuite, on refroidit le mélange et on fait précipiter les copolymères par acidification.

2. Copolymères selon la revendication 1, susceptibles d'être obtenus par réaction de solutions alcalines de glucose à des valeurs de pH de 8 à 10 avec l'acide acrylique et/ou l'acide méthacrylique en présence de peroxyde d'hydrogène.

3. Procédé de préparation de copolymères à base d'acides carboxyliques insaturés et de monosaccharides aptes à la formation d'énolates, caractérisé en ce qu'on copolymérise les acides carboxyliques insaturés, en une quantité de 35 à 80 % en poids, par rapport aux monomères totaux, avec une solution alcaline des monosaccharides aptes à la formation d'énolates, en présence d'initiateurs radicalaires, à des températures comprises entre 60 et 110°C, au moins un des deux monomères étant ajouté goutte à goutte au mélange de réaction dans la cuve de réaction, ensuite, on refroidit le mélange et on fait précipiter les copolymères par acidification.

4. Utilisation de copolymères selon la revendication 1 ou 2 comme séquestrants, formateurs de complexes et co-adjuvants de produits de lavage et nettoyage.
